Europäisches Patentamt

**European Patent Office**

Office européen des brevets

(11) Publication number: **0 062 966**
**A1**

(12) **EUROPEAN PATENT APPLICATION**

(21) Application number: **82301074.9**

(22) Date of filing: **03.03.82**

(51) Int. Cl.³: **A 01 G 31/02**

(30) Priority: **15.04.81 US 254320**

(43) Date of publication of application:
**20.10.82 Bulletin 82/42**

(84) Designated Contracting States:
**BE CH DE FR GB IT LI LU NL SE**

(71) Applicant: **WHITTAKER CORPORATION**
**10880 Wilshire Boulevard**
**Los Angeles, California 90024(US)**

(72) Inventor: **Hancock, Mark W.**
**850 Moraga Drive no.4**
**Los Angeles California 90049(US)**

(72) Inventor: **Eisenberg, Steven K.**
**3180 Melody Lane**
**Simi California 93063(US)**

(74) Representative: **Wilson, Joseph Martin et al,**
**WITHERS & ROGERS 4 Dyer's Buildings Holborn**
**London EC1N 2JT(GB)**

(54) **Improved system and method for hydroponically growing plants.**

(57) A system for hydroponically growing plants includes a pressure vessel (18) containing equipment such as a splash plate (20) for substantially increasing the surface area of liquid to be introduced into the pressure vessel. The system also includes a gas transfer conduit (22) for passing selected plant growth promoting gas such as oxygen, air, ammonia and/or carbon dioxide, from a gas source into the vessel and a conduit (14) for passing hydroponic plant growing liquid into the vessel and for directing it against the splash plate or the like and thus facilitate rapid dissolving therein of the gas introduced into the pressure vessel. Conduits (36, 42, 44) are also provided for passing the gas-enriched liquid to a plurality of plants and may also be provided for returning the same to the pressure vessel for replenishment of the gas depleted therefrom. The system may include gas vents, a holding vessel (12) for the liquid and a gas level sensor (54) connected to the return conduit (50) and to a valve (24) in the gas supply line for regulating the concentration of gas in the pressure vessel in response to the concentration of gas in the depleted liquid. The method preferably employs the system on a substantially continuous basis. The pressure vessel is usually operated at superatmospheric pressure to assure a maximum concentration of dissolved gas in the liquid.

Fig. 1

# IMPROVED SYSTEM AND METHOD FOR HYDROPONICALLY GROWING PLANTS

## BACKGROUND OF THE INVENTION

### Field of the Invention

The present invention generally relates to an improved system and method for growing of plants, more particularly for hydroponically growing plants in the presence of controlled amounts of growth promoting gas.

### Prior Art

The importance of oxygen for plant growth is of long standing knowledge. It has been observed that most plants cannot survive growing in stagnant oxygen depleted water. Plant and root infections increase when root aeration is restricted. Anaerobic conditions in the root medium result in rapid excretion of sugars, amino acids and carboxylic acids; such compounds are known to adversely affect plant growth. A logarithmic relationship has been observed between growth of tomato plants and oxygen tension and a relationship has also been observed between nutrient absorption and the extent of aeration of the root medium.

Most commercial hydroponic plant growing systems employing recirculating nutrient solutions are vulnerable to and frequently exhibit plant root oxygen deficits. If insufficient oxygen is supplied to the roots, nutrient solids uptake is reduced and toxic organic compounds are released into the solution by the roots. Buildup of nutrient compounds in recirculating nutrient solution may reach toxic levels. Increased root sloughing due to the toxic compounds released into the solution causes increased system biochemical oxygen demand and consequent further reduction of available oxygen levels. This situation can continue to the point of total root death. In any event, roots insufficiently supplied with oxygen exhibit increased susceptibility to root pathogens.

Accordingly, it would be desirable to provide an improved system and method for hydroponically growing plants on a commercial basis with assurance of improved oxygen supplies to the root systems of the plants throughout the growing period.
Such oxygenation should be controlled to optimize plant growth.
In some instances, it would also be important to be able to supply
through such system and method another type of plant growth promoting
gas such as carbon dioxide or ammonia. Preferably, the system
and method should be adaptable to continuous usage in an
automated or semi-automated mode.

## SUMMARY OF THE INVENTION

The foregoing needs are satisfied by the improved system
and method of the present invention. The system and method
are substantially as set forth in the Abstract above. In the
system and method, a pressure zone such as a pressure vessel
preferably at superatmospheric pressure is provided wherein liquid
plant growth nutrient solution is increased in total surface area
by, for example, contacting it with a splash plate to form droplets,
and while in such form is contacted with a selected plant growth
promoting gas such as air, oxygen, ammonia, carbon dioxide or
mixtures thereof. The gas is dissolved in the liquid to a substantial extent and then the gas-enriched liquid is delivered to
the plants being hydroponically grown in the liquid. Gas depleted
liquid may be returned from the plant growing area to the pressure
vessel for regasification. If the gas is carbon dioxide or ammonia,
the pH of the liquid is adjusted to a desired range before the liquid
is passed to the plants.

Sensor means such as a gas level sensing probe may be inserted
in the liquid return line and connected to a solenoid operated
valve in the gas supply line to automatically regulate the
concentration of gas in the pressure vessel in accordance with the
concentration of gas in the gas-depleted hydroponic plant growing
liquid returning to the vessel. All or a portion of the liquid may
be periodically passed to a cleanup facility to remove plant waste
products and other imbalances and then returned to the system, and
controlled amounts of fresh makeup liquid are added to the system to replace the liquid which is absorbed by the plants. The system
and method are inexpensive, are easily automated for continuous
or semi-continuous use and are very efficient in promoting maximum
hydroponic growth of plants. Further features of the present
invention are set forth in the following detailed description and
accompanying drawings.

## DRAWINGS

Figure 1 is a schematic flow diagram illustrating a preferred
embodiment of the improved system of the present invention; and,

Figure 2 is a schematic side elevation, partly broken away, of a
preferred embodiment of the pressure vessel utilized in Fig. 1.

## DETAILED DESCRIPTION

### Fig. 1

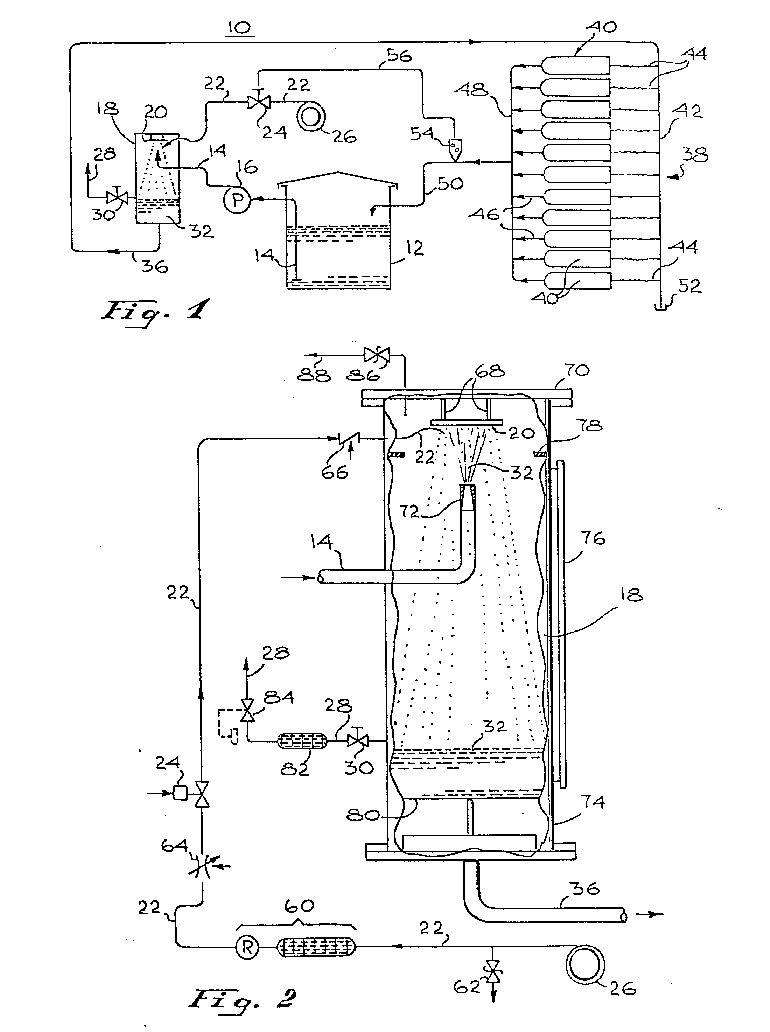

Now referring more particularly to Fig. 1 of the accompanying
drawings, a schematic flow diagram of a preferred embodiment of
the improved system of the present invention is set forth therein.
Thus, system 10 is shown which comprises a storage or recirculation
tank 12 from which a hydroponic plant growth liquid 32 which is a
nutrient solution such as Hoagland's solution, a well recognized aqueous solution,
is pumped via line 14 and pump 16 to a cylindrical gas pressure
vessel 18. Line 14 passes into vessel 18 and terminates adjacent
to a horizontally disposed splash plate 20 depending from the upper
portion of vessel 18. Liquid 32 exiting line 14 in vessel 18 is
directed upwardly perpendicular against splash plate 20 with sufficient
force to cause liquid 32 to break up into a plurality of fine droplets
which gravitate downwardly in vessel 18 and are contacted by plant
growth promoting gas in vessel 18 to increase the concentration of
that gas in liquid 32. That gas is, as indicated previously,
oxygen, air, ammonia, carbon dioxide or a mixture thereof and is
introduced into vessel 18 through a line 22 having a valve 24 therein.

Line 22 originates at a gas source 26 which may be a compressor, compressed gas cylinder or the like.

Pressure vessel 18 is provided with a vent line 28 having a valve 30 therein. The bottom portion of vessel 18 is shown with gas-enriched hydroponic plant growing liquid 32 therein and is provided with a bottom liquid outlet line 26 which passes gassified liquid 32 from vessel 18 to a hydroponic plant growth area 38 containing a plurality of plants 40 growing in liquid 32. Thus, line 36 connects to a manifold 42 containing a plurality of capillary conduits 44 opening adjacent separate ones of plants 40, specifically adjacent the roots thereof. Plants 40 are disposed in troughs, tubs, containers or other enclosures (not shown) and a plurality of exit lines 46 are connected thereto, which lines run to a return manifold 48 which connect to a return line 50. Return line 50 passes into storage tank 12. In Fig. 1, manifold 42 is shown with an end cap 52 which permits additional lines 44 and plants 40 to be added to area 38.

Return line 50 has connected thereto a sensor 54 which detects the level of dissolved gas in the gas-depleted hydroponic plant growing liquid 32 in line 50 and which passes a signal through line 56 to solenoid operated valve 24, to direct the opening and closing of that valve so as to control the concentration of gas passing through line 22 into pressure vessel 18. Thus, the regasification of gas depleted hydroponic plant growing liquid 32 in pressure vessel 18 can be automatically controlled by operation of sensor 54 and valve 24. If desired, a liquid bleed-off or pump-out line (not shown) and a makeup line for passage of fresh makeup liquid (not shown) can be provided in system 10 to replenish nutrients and liquid utilized by plants 40 and to permit removal from system 10 of plant waste products and/or undesirable of nutrient solids produced by long-continued circulation of liquid 32 in system 10.

It will be understood that, if desired, line 50 can pass all or part of depleted liquid 32 directly to waste, rather than back to tank 12 for return to vessel 18 and reuse.

## Fig. 2

Now referring more particularly to Fig. 2 of the accompanying drawings, the details of pressure vessel 18 and assorted equipment such as are utilized in system 10 are shown therein. As can be seen from Fig. 2, plant growth promoting gas is pumped by compressor 26 via line 22 through a filter-pressure regulator unit 60. A pressure relief valve 62 is installed between compressor 26 and filter pressure regulator unit 60 to prevent failure of compressor 26 due to abnormal line blockage. After passing through unit 60, the purified gas is conducted through line 22, a valve sight flow indicator 64 and valve 24. As noted above, valve 24 may be connected to sensor 54 and be a solenoid operated valve for control by sensor 54. For such purposes it can be a proportionating valve or an on/off valve. A check valve 66 may be placed in line 22 close to vessel 18 to prevent back flow in the case of failure of compressor 26 or the like.

Compressed growth promoting gas is injected into vessel 18 near the top thereof through line 22, terminating just below horizontal splash plate 20 suspended by struts 68 from the roof 70 of vessel 18 in the interior thereof. Hydroponic plant growing liquid 32 is passed from tank 12 (Fig. 1) to vessel 18 by inlet line 14 which terminates directly below plate 20 and which includes a nozzel 72. Nozzle 72 directs a stream of liquid 32 against plate 20 at about a right angle thereto so that a plurality of fine droplets of liquid 32 are formed. These droplets gravitate to the pool of liquid 32 in the bottom of portion 74 of vessel 18. A sight window 76 may be provided in the side of vessel 18 to visually observe the liquid level in vessel 18.

As the droplets of liquid 32 descend in vessel 18 they are intimately contacted with the gas introduced into vessel 18 through line 22, preferably at substantially elevated pressure so that gasification of the droplets occurs rapidly. For example, when vessel 18 is operated at an internal pressure of about 23.5 - 25 psia utilizing air as the growth-promoting gas, a dissolved oxygen level approximately 50% higher than the equilibrium oxygen level of the liquid at sea level can be maintained in the liquid so that the same amount of oxygen can be supplied to plants 40 (Fig. 1) in 1/3 less liquid 32 than would otherwise be required for hydroponic plant growing, thereby reducing liquid pumping requirements. It will be understood, however, that if desired, vessel 18 could be operated at atmospheric pressure and that gas supplied thereto through line 22 could also be at essentially atmospheric pressure.

Pressure vessel 18 may be provided with a ring baffle 78 which reduces the amount of liquid 32 draining down the inner surface of the side walls of vessel 18. An anti-vortex effluent baffle 80 may be provided in the lower portion of vessel 18 to prevent undissolved gas from entering exit line 36. At the desired liquid level in pressure vessel 18 there may be provided an outlet gas port connected to vent line 28 in which are disposed valve 30, filter 82 and float valve 84. Float valve 84 provides venting of gases when the liquid level is below the float and provides a positive seal against loss of gases and hydroponic plant growing liquid 32 when the liquid level is above the float in that valve 84. Inasmuch as valve 84, at its equilibrium position, may tend to pass fluid droplets as well as gases, line 28 can, if desired, be shunted to reservoir 12 (not shown). In addition, vessel 18 may be provided with a separate safety pressure relief valve 86 in a line 88 at the upper end of vessel 18 to prevent an explosion in the unlikely event of flow blockage or other abnormal conditions.

The following specific examples further illustrate further features of the present invention.

## EXAMPLE I

The system of Figs. 1 and 2 is utilized in practicing the present method. Thus, liquid 32 is Hoagland's solution disposed in circulation tank 12 and passed from that tank via line 14 by pump 16 to pressure vessel 18 at a constant rate of 140 gallons per minute. Pressure vessel 18 is formed of polyvinyl chloride and has a height of 8 feet and an internal diameter of 36 inches. Line 14 is fitted with nozzle 72 and is set at a 90° angle to the horizontal surface of a 6 inch x 9 inch diameter polyvinyl chloride splash plate 20. Large numbers of small solution droplets are produced which come into contact with air being supplied to vessel 18 from compressor 26 through line 22 at the rate of one standard cubic foot per minute. The concentration of oxygen in the gas-enriched solution 32 is about 12 ppm. This gas-enriched liquid 32 is then conducted via bottom exit line 36 to a plurality of European cucumber plants 40, passing through manifold 42 and capillary feed tubes 44. Plants 40 are hydroponically grown in elongated troughs containing the nutrient solution 32.

The combined effect of the oxygen takeup of plants 40, effervescence of liquid 32 and the biochemical oxygen demand of the system is a reduction of the solution oxygen level in liquid 32 to 7 ppm. After contact with the plant roots, nutrient solution 32 (that portion not absorbed by the plants) is collected by return lines 46, exit manifold 48 and return line 50 and is conducted in line 50 to recirculation tank 12. Gas-depleted liquid 32 is then passed to vessel 18, regassified in the manner described above and then passed back to plants 40 for reuse. Thus, the system operates on a substantially continuous recycling basis.

The oxygen level in gas-depleted liquid 32 is sensed by an oxygen sensing probe 54 in line 50, which probe generates a signal transmitted via line 56 to solenoid actuated valve 24 in line 22 so as to control the flow of air into vessel 18 and thus the extent of re-oxygenation of gas-depleted liquid 32 in vessel 18. Maximum yields of fully grown cucumbers are obtained with a minimal amount of labor, time and cost utilizing the described method and system. The described system is operated in an almost fully automatic mode, requiring a minimal of supervision. Additional amounts of fresh liquid 32 are periodically added to the system to replace that portion of liquid 32 which is absorbed by plants 40.

### EXAMPLE II

The system and method described in Example I utilizing the equipment depicted in Figs. 1 and 2 are employed in the hydroponic growing of tomato plants utilizing in parallel tests Hoagland's solution and other aqueous solutions containing conventional hydroponic plant growth minerals in dissolved form. In each test pure oxygen from a compressed cylinder is substituted for air. Since partial pressure of oxygen in vessel 18 is 100%, the necessity to vent vessel 18, such as is required with air to reduce the nitrogen content of gases in vessel 18, is eliminated. Substantially all oxygen in vessel 18 eventually is dissolved in liquid 32. The level of dissolved oxygen in liquid 32 is about 4.8 times greater than when air is used, as in Example I, for comparable pressures in vessel 18. Since oxygen is a major limiting growth factor, the pumping capacity to plants 40 is substantially reduced below the low levels required for Example I.

In further parallel tests, it is demonstrated that various mixtures of air or oxygen, ammonia and/or carbon dioxide are successfully used in the system and method of the present invention for gasification of liquid 32 and supply to plants 40 in order to stimulate full, rapid and proper hydroponic growth thereof. When ammonia or carbon dixoide is used, pH adjustments are made in liquid 32 through the addition thereto of suitable conventional acids, bases, acidic or basic salts, etc.

Various other modifications, changes, alterations and additions can be made in the system of the present invention, its components and parameters and in the method of the present invention, its steps and parameters. All such changes, modifications, alterations and additions as are within the scope of the present claims form part of the present invention.

0062966

CLAIMS:

1. An improved system for hydroponically growing plants, said system comprising, in combination:

   a. a pressure vessel containing a means for increasing the surface area of liquid;

   b. conduit means for introducing hydroponic plant growing liquid into said pressure vessel and for directing said liquid against said liquid surface area increasing means to increase said liquid surface area;

   c. gas transfer means for introducing a selected plant growth promoting gas to said vessel and into contact with said liquid of increased surface area to dissolve said gas in said liquid;

   d. conduit means for transferring the resulting gas-enriched hydroponic plant growing liquid into contact with a plurality of hydroponically growing plants;

2. The improved system of claim 1 wherein said system includes conduit means for recycling said liquid, when the concentration of said gas decreases to a predetermined level therein, to said pressure vessel for dissolving of additional amounts of said gas in said liquid to replenish said liquid.

3. The improved system of claim 2 wherein said system includes a holding vessel for said liquid, said holding vessel being connected to said recycling conduit means and wherein said surface area increasing means comprises a splash plate adapted to break up said liquid, when impinged thereon, into droplets.

4.  The improved system of claim 3 wherein said system includes a source of said gas connected to said gas transfer means, and wherein said system also includes gas venting means.

5.  The improved system of claim 4 wherein said source is adapted to supply gas selected from the group consisting of air, oxygen, ammonia, carbon dioxide and mixtures thereof at desired pressure to said gas transfer means.

6.  The improved system of claim 5 wherein said system includes gas level sensing means connected to said recycling conduit means and to valve means in said gas transfer means for regulating the supply of said gas to said pressure vessel in response to the concentration of said gas in said gas depleted hydroponic growing liquid in said recycling conduit means.

7.  An improved method of hydroponically growing plants, said method comprising:

    a.  dissolving selected plant growth promoting gas e.g. air, oxygen, $CO_2$, ammonia or a mixture thereof to a preselected level in hydroponic plant growing liquid e.g. in droplet form in a treating zone at preselected pressure;

    b.  passing said gas-enriched hydroponic plant growing liquid into contact with a plurality of plants disposed in a hydroponic growing zone for nourishment of said plants; and

    c.  maintaining said contact until the concentration of said dissolved gas in said liquid falls below a predetermined level.

- 3 -

0062966

8.   The improved method of claim 7 wherein after said contact is broken, said liquid is recycled to said treating zone for increasing the concentration of dissolved gas therein and subsequent return of the resulting replenished liquid into contact with said plants.

9.   The improved method of claim 8 wherein said method is substantially continuous and wherein at least periodically an additional amount of said liquid is added to replace that liquid which is absorbed by said plants.

10.   The improved method of claim 8 wherein said gas is dissolved in said liquid at superatmospheric pressure preferably sufficiently high so as to substantially decrease the amount of said liquid needed per unit time to supply said plants with adequate growth stimulating amounts of said gas.

Fig. 1

Fig. 2

**European Patent Office**

## EUROPEAN SEARCH REPORT

Application number

EP 82 30 1074.9

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| P,X | <u>WO - A1 - 81/01940</u> (E.H.S. STÖSTEDT) <br> * claims 1 to 3; page 3, line 1 to page 4, line 28; page 5, line 25 to page 6, line 15; fig. 1 * <br><br> -- | 1,2,4, 6,7 | A 01 G 31/02 |
| A | <u>US - A - 4 003 160</u> (H. MÜLLER) <br> * column 2, line 58 to column 4, line 45; fig. * <br><br> -- | 1,4 | |
| A | <u>US - A - 4 245 433</u> (E.H.S. SJÖSTEDT et al.) <br> * claims 15, 16; column 2, line 33 to column 3, line 4; fig. 1 * <br><br> -- | 5,7,9 | **TECHNICAL FIELDS SEARCHED (Int.Cl. ³)** <br><br> A 01 G 31/00 <br> B 01 F 3/04 <br> B 01 F 5/00 |
| A | <u>GB - A - 576 598</u> (ALUMINIUM PLANT & VESSEL CO. LTD. et al.) <br> * whole document * <br><br> ---- | 3 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 28-06-1982 | BERGZOLL |